(19) Europäisches Patentamt
European Patent Office
Office européen des brevets

(11) **EP 1 830 505 A1**

(12) **EUROPEAN PATENT APPLICATION**

(43) Date of publication:
**05.09.2007 Bulletin 2007/36**

(51) Int Cl.:
**H04L 1/00** (2006.01)

(21) Application number: **07004285.8**

(22) Date of filing: **01.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **01.03.2006 CN 200610057841**

(71) Applicant: **NTT DoCoMo Inc.**
**Chiyoda-ku**
**Tokyo 100-6150 (JP)**

(72) Inventors:
• **Yan, Chunlin**
**Haidian District**
**Beijing, 100080 (CN)**

• **Zhang, Zhan**
**Haidian District**
**Beijing, 100080 (CN)**
• **Kayama, Hidetoshi**
**Haidian District**
**Beijing, 100080 (CN)**

(74) Representative: **Stöckeler, Ferdinand et al**
**Schoppe, Zimmermann,**
**Stöckeler & Zinkler**
**Postfach 246**
**82043 Pullach bei München (DE)**

(54) **Adaptive space-time coding and modulation method and transmitter**

(57)     The present invention provides an adaptive space-time coding and modulation method and a transmitter. The method includes: obtaining a curve corresponding to a modulation mode, a channel coding rate, a coding mode of a space-time code, a parameter indicating signal transmission quality and SNR by simulating or measuring at transmit-side and making a table with correspondences between the SNR, the modulation mode and the coding mode of the space-time code according to a SNR range corresponding to a predefined signal transmission quality. Higher frequency spectrum efficiency can be achieved with the quality of service guaranteed.

object BER= 10-3, quasi-static independent identically distributed Rayleigh fading channel

| SNR | spectrum efficiency (using TAST, PCU=1) | spectrum efficiency (using TAST, PCU=2) | spectrum efficiency (using TAST, PCU=4) | spectrum efficiency (present invention) |
|---|---|---|---|---|
| 0 dB | 1 bits/s/Hz | | | 1 bits/s/Hz |
| 4.5 dB | 2 bits/s/Hz | 2 bits/s/Hz | | 2 bits/s/Hz |
| 7.5 dB | 2 bits/s/Hz | 4 bits/s/Hz | 4 bits/s/Hz | 4 bits/s/Hz |
| 13 dB | 4 bits/s/Hz | 4 bits/s/Hz | 8 bits/s/Hz | 8 bits/s/Hz |
| 20.5 dB | | 8 bits/s/Hz | 16 bits/s/HZ | 16 bits/s/Hz |

Fig. 3

EP 1 830 505 A1

**Description**

Field of the Invention

The present invention relates to wireless communication technology and more particularly to an adaptive space-time coding and modulation method and a transmitter.

Background of the Invention

Adaptive modulation is a kind of modulation, which can adaptively change modulation modes according to channel conditions. For example, BPSK is used when SNR is low and QPSK, 16QAM and 64QAM may be respectively used when SNR increases gradually. A high-order modulation may contribute to system data transmission rate and improves system spectrum efficiency.

In order to guarantee system robustness when using a high-order modulation, adaptive channel coding may be further adopted such as adding Turbo code with a code rate of 1/2 or 3/4. After adopting the adaptive channel coding, since the code rate is less than 1, the data transmission efficiency is reduced while the robustness of data transmission is greatly improvely. In a time-varying and multi-path fading wireless communication channel, a robust data transmission is of great importance.

As discussed above, since the adaptive coding and modulation can improve the the robustness of the data transmission and data transmission efficiency of the system, the adaptive coding and modulation has become one of the most important parts in modern communication system.

In addition, as a trend of modern communication technology, MIMO technology can greatly improve system capacity or reduce bit error rate (BER) of the data transmission while enhancing the performance of the wireless communication system. In a communication system using MIMO, the adaptive coding and modulation can also improve its data transmission rate and robustness. The space-time codes adopted by the MIMO system are mainly of two types: one with diversity gain and the other with multiplexing gain.

The principle of the space-time code is to obtain certain space diversity and time diversity with help of the space code and time code so as to reduce the BER. The architecture of the space-time code adopted by the adaptive code modulation of the existing MIMO system is fixed. Generally, the space-time code selects a space-time block code (STBC) so as to obtain the diversity gain or selects a vertical-bell labs space-time (VBLAST) architecture so as to obtain the multiplexing gain. Then the adaptive modulation is adopted to further improve the data transmission rate and robustness.

However, in the MIMO system, when the SNR is relatively low, the diversity gain is of great importance in obtaining a small spectrum efficiency while guaranteeing a certain signal transmission quality, and the space-time code with large diversity gain will help in achieving a better system performance; when the SNR is relatively high, the multiplexing gain is more advantageous and the space-time code with large multiplexing gain will play an important role. Therefore, if the space-time code with a fixed architecture is simply combined with the adaptive coding and modulation, the better effect cannot be achieved.

Recently, a space-time code with both multiplexing gain and diversity gain is proposed. The multiplexing-diversity gain is adjustable and the space-time code can achieve tradeoff between multiplexing and diversity. Generally the adaptive coding and modulation using this space-time code only modulates external code rate (such as a Turbo code and LDPC code) and modulation modes (BPSK, QPSK, 16QAM) while the architecture of the space-time code is fixed, a better system performance cannot be achieved.

Summary of the Invention

An object of the present invention is to provide a method and device, which can achieve a higher frequency spectrum efficiency and a better system robustness by adjusting a coding mode of the space-time code.

According to first aspect of the present invention, an adaptive space-time coding and modulation method is provided, including: obtaining a curve corresponding to a modulation mode, a coding mode of a space-time code, a parameter indicating signal transmission quality and a SNR by simulating or measuring at transmit-side and making a table with correspondences among the SNR, the modulation mode, channel code rate and the coding mode of the space-time code according to a SNR range corresponding to a predefined signal transmission quality, or obtaining a curve corresponding to a modulation mode, a channel coding rate, a coding mode of a space-time code, a parameter indicating signal transmission quality and a SNR by simulating or measuring at transmit-side and making a table with correspondences between the SNR, the modulation mode, the channel coding rate and the coding mode of the space-time code according to a SNR range corresponding to a predefined signal transmission quality; obtaining the SNR at receive-side by measurement or feedback channel, comparing the obtained SNR with the SNR range according to the table and slecting corresponding modulation mode and coding mode of the space-time code or selecting corresponding modulation mode, channel coding rate and coding mode of the space-time code; and performing signal modulation and space-time coding or performing signal modulation, channel coding and space-time coding according to the selected results.

According to the second aspect of the present invention, a transmitter includes: a table-making module, for obtaining a curve corresponding to a modulation mode, a coding mode of a space-time code, a parameter indicating signal transmission quality and a SNR by simulating or measuring at the transmitter and making a corresponding table taking into account the SNR, the modulation mode and the coding mode of the space-time code according to a SNR range and the predefined signal transmission quality, or obtaining a corresponding curve with taking into account modulation mode, channel coding rate, coding mode of a space-time code, parameter indicating signal transmission quality and SNR by simulating or measuring at the transmitter and making a corresponding table; an obtaining and selecting module, for obtaining the SNR at receiver by measurement or feedback channel, comparing the obtained SNR with the SNR range according to the table and slecting corresponding modulation mode and coding mode of the space-time code or selecting corresponding modulation mode, channel coding rate and coding mode of the space-time code; and a coding and modulation module, for performing signal modulation and space-time coding or performing signal modulation, channel coding and space-time coding according to the selected results.

The advantageous effect of the present invention is that according to the adaptive coding and modulation method and the transmitter of the present invention, the system spectrum efficiency can be improved by optimizing the architecture of the space-time code and thus a higher frequency efficiency and a better system robustness can be obtained. In addition, the table may be dynamically adjusted according to the feedback from the receiver and the adaptive coding and modulation may be performed more flexibly.

Brief Description of the Drawings

Fig. 1 is a schematic diagram showing the architecture of a transmitter according to an embodiment of the present invention;
Fig. 2 is a curve diagram obtained by simulations according to an embodiment of the present invention showing a performance of a $4\times4$ MIMO system;
Fig. 3 is a schematic diagram showing a comparison of performance between the adaptive modulation method of an embodiment of the present invention and a traditional method with a same SNR; and
Fig. 4 is a schematic diagram showing a comparison of SNR-frequency efficiency performance between the adaptive modulation method of an embodiment of the present invention and a traditional method.

Detailed Description of the Invention

The present invention provides an adaptive coding and modulation method combined with space-time coding for a MIMO system and a transmitter using thereof.

The adaptive coding and modulation method mainly combines the modulation mode with the space-time coding or combines the modulation mode, channel coding and space-time coding together and adjusts the above two combinations so as to obtain higher frequency spectrum efficiency and better system robustness.

The difference from the existing space-time coding is that the adaptive coding and modulation method according to an embodiment of the present invention uses a well known space-time code whose per channel use (PCU) is adjustable, such as the linear dispersion space-time code (LD code), threaded algebra space-time code (TAST) and other space-time code, but the architecture of the space-time code changes with the change of the channel. Therefore, when using the same space-time code (only the architecture changes with change of the channel), since the decoding method is the same as the exsiting one, the complexity of the receiver can be further reduced and there is no need to design two decoding methods (space-time code block and VBLAST).

Next, before explaining the adaptive coding and modulation method and the transmitter according to the present invention in detail, the threaded algebra space-time code (TAST) is taken as an example to explain the coding mode (architecture change) of the space-time code in the present invention.

The coding rate of the space-time code is defined as the number of the symbols transmitted in each slot by each antenna and can also be described by the PCU. When the coding rate is 1, the coding matrix of the threaded algebra space-time code (TAST) is:

$$
\begin{pmatrix}
s_1 & \phi^{3/4}s_4 & \phi^{2/4}s_3 & \phi^{1/4}s_2 \\
\phi^{1/4}s_2 & s_1 & \phi^{3/4}s_4 & \phi^{2/4}s_3 \\
\phi^{2/4}s_3 & \phi^{1/4}s_2 & s_1 & \phi^{3/4}s_4 \\
\phi^{3/4}s_4 & \phi^{2/4}s_3 & \phi^{1/4}s_2 & s_1
\end{pmatrix}
$$

In the above matrix, $\phi$ is a Diophantine number for guaranteeing the full diversity of the space-time code. This coding matrix transmits symbols $S_1 \sim S_4$ (4 symbols) in four time slots.

When the coding rate is 2, the coding matrix is:

$$
\begin{pmatrix}
s_{11} & \phi^{3/4}s_{42} & \phi^{2/4}s_{31} & \phi^{1/4}s_{22} \\
\phi^{1/4}s_{21} & s_{12} & \phi^{3/4}s_{41} & \phi^{2/4}s_{32} \\
\phi^{2/4}s_{31} & \phi^{1/4}s_{22} & s_{11} & \phi^{3/4}s_{42} \\
\phi^{3/4}s_{41} & \phi^{2/4}s_{32} & \phi^{1/4}s_{21} & s_{12}
\end{pmatrix}
$$

This coding matrix transmits symbols $S_{11} \sim S_{42}$ (8 symbols) in four time slots. When the coding rate is 3, the coding matrix is:

$$
\begin{pmatrix}
s_{11} & \phi^{3/4}s_{42} & \phi^{2/4}s_{33} & \phi^{1/4}s_{24} \\
\phi^{1/4}s_{21} & s_{12} & \phi^{3/4}s_{43} & \phi^{2/4}s_{34} \\
\phi^{2/4}s_{31} & \phi^{1/4}s_{22} & s_{13} & \phi^{3/4}s_{44} \\
\phi^{3/4}s_{41} & \phi^{2/4}s_{32} & \phi^{1/4}s_{23} & s_{14}
\end{pmatrix}
$$

Where $(s_{i1}, s_{i2}, s_{i3}, s_{i4}) = M(u_{i1}, u_{i2}, u_{i3}, 0)$, $i=1,2,3,4$. $M$ is the rotation matrix with dimention $4 \times 4$ and $u_{i1}$ is the modulated symbol. This coding matrix transmits symbols $S_{11} \sim S_{42}$ (12 symbols) in four time slots.

When the coding rate is 4, the coding matrix is:

$$
\begin{pmatrix}
s_{11} & \phi^{3/4}s_{42} & \phi^{2/4}s_{33} & \phi^{1/4}s_{24} \\
\phi^{1/4}s_{21} & s_{12} & \phi^{3/4}s_{43} & \phi^{2/4}s_{34} \\
\phi^{2/4}s_{31} & \phi^{1/4}s_{22} & s_{13} & \phi^{3/4}s_{44} \\
\phi^{3/4}s_{41} & \phi^{2/4}s_{32} & \phi^{1/4}s_{23} & s_{14}
\end{pmatrix}
$$

Where $(s_{i1}, s_{i2}, s_{i3}, s_{i4}) = M(u_{i1}, u_{i2}, u_{i3}, u_{i4})$, $i=1,2,3,4$.

This coding matrix transmits symbols $S_{11} \sim S_{44}$ (16 symbols) in four time slots.

In order to obtain a higher spectrum efficiency while guaranteeing the signal transmission quality, since the diversity is of a dominating factor when the SNR is relatively low, the coding can select a relatively small PCU; when the SNR increases gradually, the multiplexing becomes more and more important and the value of the PCU can be increased gradually Therefore, the space-time coding mode according to the present invention can adjust the data transmission rate of the system by adjusting the per channel use (PCU) of space time codes.

embodiment 1

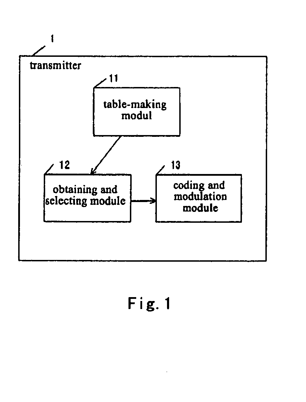

Fig. 1 is a schematic diagram showing the architecture of a transmitter 1 according to an embodiment of the present invention.

Fig. 1 shows transmitter 1 in embodiment 1 includes a table-making module 11, an obtaining and selecting module 12, a coding and modulation module 13.

The table-making module 11 obtains a curve corresponding to a modulation mode, a coding mode of a space-time code, a parameter indicating signal transmission quality and a SNR by simulations or measurement at the transmitter so as to get a SNR range guaranteeing the predefined signal transmission quality; and makes a table with correspondences between the SNR, the modulation mode and the coding mode of the space-time code according to the SNR range corresponding to a predefined signal transmission quality.

The parameter indicating signal transmission quality includes bit error rate (BER), frame error rate, or block error rate, etc. The SNR range can be set freely according to the practical communication requirements.

The obtaining and selecting module 12 obtains the SNR at the receiver by measuring a channel status or through a feedback channel (SNR fed back by the receiver), compares the obtained SNR with the SNR range according to the table made by the table-making module 11, and selects the corresponding modulation mode and coding mode of the space-time code if the obtained SNR is within a SNR range.

The coding and modulation module 13 performs the signal modulation and space-time coding according to the results from the obtaining and selecting module 12.

At the same time, the table-making module 11 and the obtaining and selecting module 12 send the table and the selection results to the receiver respectively so that the receiver can demodulate and decode signals with the existing demodulation and decoding technologies which will not be described in detail here.

An example will be given in explaining how the table-making module 11 makes the table.

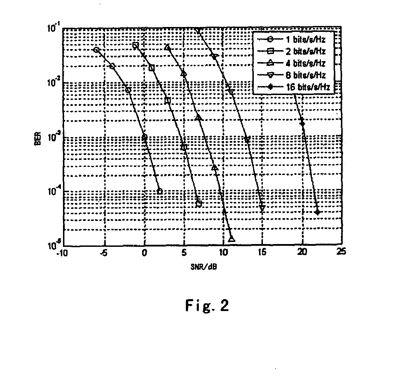

Fig. 2 is a simulation curve diagram obtained by the table-making module 11 in a $4\times4$ MIMO system, which correspondes to the modulation mode, coding mode of the space-time code, parameter indicating the signal transmission quality and SNR. The horizontal axis represents the SNR and the vertiocal axis represents the bit error rate (BER).

At this time, the table-making module 11 may select 2dB, 6.5dB, 9.6dB, 14.5dB, 21.5dB (other number can also be selected) as the SNR thresholds with the principle of BER=$10^{-4}$ based on an actual communication requirement. In the simulation curve of Fig. 2, according to the simulation curve in accordance with the BER=$10^{-4}$ and the SNR thresholds, the corresponding modulation mode and the coding mode of the space-time code (the PCU of the space-time coding) can be obtained and thus a table represented by table 1 can be obtained.

Herein, the cross point (SNR value, 2dB etc.) of the horizontal line of BER=$10^{-4}$ with the simulation curve is selected as the SNR threshold. Of course, the SNR threshold can be set according to the experience in communications.

Table 1: Table Made by Table-making Module 11 According to Embodiment 1 of Present Invention

| SNR Range (dB) | 2< SNR≤6.5 | 6.5< SNR≤9.6 | 9.6< SNR≤14.5 | 14.5< SNR≤21.5 | 21.5< SNR |
|---|---|---|---|---|---|
| Modulation Mode | BPSK | QPSK | QPSK | QPSK | 16QAM |
| Per Channel Use of Space-time Coding (PCU) | 1 | 1 | 2 | 4 | 4 |
| Frequency Spetrum Efficiency (bits/s/Hz). | 1 | 2 | 4 | 8 | 16 |

Table 1 shows in the embodiment 1, both the coding mode of the space-time code and the modulation mode are changing adaptively with the change of the SNR For example, a space-time code with a low PCU (per channel use) is selected when the SNR is low so as to obtain a good BER performance; the PCU of the space-time code is increased when the SNR is relatively high so as to improve the frequency spectrum use ratio of the system so that a high frequency spectrum efficiency can be obtained under the prerequisite of guaranteeing a certain signal transmission quality.

Embodiment 2

The architecture of the transmitter according to embodiment 2 of the present invention is similar to that of the embodiment 1, including a table-making module 11, an obtaining and selecting module 12 and a coding and modulation module 13.

The table-making module 11 obtains a curve corresponding to a modulation mode, a coding mode of the space-time code, a parameter indicating signal transmission quality and a SNR by simulation or measurement at the transmitter so as to get a SNR range guaranteeing the predefined signal transmission quality; and makes a table with correspondences between the SNR, the modulation mode, the channel coding rate and the coding mode of the space-time code according to a SNR range corresponding to a predefined signal transmission quality. Herein, the parameter indicating signal transmission quality includes bit error rate, frame error rate, or bit error rate, etc. The channel coding rate is the one of the external code (such as the Turbo code and LDPC code).

The obtaining and selecting module 12 obtains the SNR at the receiver by measuring a channel status or through a feedback channel, compares the obtained SNR with the SNR range according to the table made by the table-making module 11, and selects the corresponding modulation mode, channel coding rate and coding mode of the space-time code if the obtained SNR is within a SNR range.

The coding and modulation module 13 performs the signal modulation, channel coding and space-time coding according to the selection results from the obtaining and selecting module 12.

At the same time, the table-making module 11 and the obtaining and selecting module 12 send the table and the selection result to the receiver respectively so that the receiver can demodulate and decode signals with the existing demodulating and decoding technologies which will not be described in detail here.

Table 2 shows an example of a table made by the table-making module 11 according to the embodiment 2 of the present invention.

In a 4x4 MIMO system, the table-making module 11 designs a table after simulation or practical measurement with the BER of $10^{-3}$.

Table 2: Table Made by Table-making Module 11 According to Embodiment 2 of Present Invention

| SNR Range (dB) | SNR≤0 | 0< SNR≤2 | 2< SNR≤3 | 3< SNR≤4 | 4< SNR≤5 | 5<SNR ≤6 | 6< SNR≤ 9 | 9<SNR ≤10 | 10<SNR |
|---|---|---|---|---|---|---|---|---|---|
| Modulation Mode | BPSK | QPSK | QPSK | QPSK | QPSK | QPSK | QPSK | 16QAM | 16QAM |
| Channel coding rate | 1/2 | 1/2 | 2/3 | 1/2 | 2/3 | 1/2 | 2/3 | 1/2 | 2/3 |
| Per Channel Use of Space-time Coding (PCU) | 1 | 1 | 1 | 2 | 2 | 4 | 4 | 4 | 4 |
| Frequency Spetrum Efficiency bits/s/Hz | 0.5 | 1 | 4/3 | 2 | 8/3 | 4 | 16/3 | 8 | 32/3 |

According to Table 2, if the SNR obtained by the obtaining and selecting module 12 by measuring or through the feedback channel is 8dB, then the modulation mode is QPSK, channel coding rate is 2/3, PCU of the space-time code is 4 according to the table. The corresponding frequency spectrum efficiency can be achieved is 16/3 bits/s/Hz at this time.

In the embodiment, since the rate of the channel coding is also adjustable, the adaptive coding and modulation method of the present invention has a good flexibility.

Table 2 shows that in the embodiment 2, not only the modulation mode, but the channel coding rate and the coding mode of the space-time code are changing adaptively with the change of the SNR. For example, proper change of channel coding rate will help to obtain a lower frequency spectrum efficiency while guranteeing signal transmission quality. The diversity is of a dominating importance when the SNR is relatively low, a relatively small PCU and small modulation order can be selected; when the SNR increases, the multiplexing becomes more and more important so the value of the PCU can be increased gradually and a proper modulation order can be selected so as to obtain a better BER performance and data transmission rate (herein, BPSK is a low order modulation mode and 16QAM is a high-order modulation mode); when the PCU reaches the maximum value, the modulation order may be adjusted to increase the data transmission rate, to obtain a higher spectrum efficiency while guaranteeing a certain signal transmission quality, so that a good system robustness and a more flexible adaptive coding and modulation can be realized.

Embodiment 3

The architecture of the transmitter according to the embodiment 3 of the present invention is similar to that of the embodiment 1 and of the embodiment 2, including a table-making module 11, an obtaining and selecting module 12 and a coding and modulation module 13.

Similarly with that in embodiment 1 and 2, the table-making module 11 firstly makes a table with correspondences among the SNR, the modulation mode and the coding mode of the space-time code, or makes a table with correspondences between the SNR, the modulation mode, the channel coding rate and the coding mode of the space-time code.

The obtaining and selecting module 12 obtains the SNR by measuring a channel status or through a feedback channel and selects the modulation mode and the coding mode of the space-time code corresponding to a SNR range, or selects the modulation mode, channel coding rate and the coding mode of the space-time code corresponding to a SNR range.

The coding and modulation module 13 performs the signal modulation and the space-time coding or performs the signal modulation, channel coding and space-time coding according to the selection result from the obtaining and selecting module 12.

At the same time, the table-making module 11 and the obtaining and selecting module 12 send the table and the selection results to the receiver respectively so that the receiver can demodulate and decode signals with the existing demodulating and decoding technologies.

Different from that in embodiment 1 and 2, after demodulation and decoding according to the table and selection results from the transmitter, if the receiver cannot obtain the signal transmission quality (such as BER) as the principle of making the table it feeds back the parameters that are acquired by the demodulation and decoding and are indicating the signal transmission quality to the transmitter.

The table-making module 11 in the transmitter re-adjusts the table or re-performs the selection according to the feedback information from the receiver.

For example, the table-making module 11 makes the table with principle of BER=$10^{-3}$. Then the table-making module 11 and the obtaining and selecting module 12 send the table and the selection result (for example, corresponding to 5dB) to the receiver. When the receiver demodulates and decodes the received signals, it obtains the BER of $10^{-2}$, then the receiver feeds back the information such as the BER of $10^{-2}$ and the SNR (currently 4dB) to the transmitter. The table-making module 11 in the transmitter changes the modulation mode etc. in the table corresponding to the SNR (4dB) fed back by the receiver, i.e. changes the modulation mode (reduces the modulation mode order such as from QPSK to BPSK) and/or changes the coding mode of the space-time code (reduces the PCU of the space-time code).

It should be noted that if the BER acquired by the receiver is not larger than $10^{-3}$, the transmitter doesn't need to adjust the table dynamicly.

Thus the transmitter according to embodiment 3 can dynamicly adjust the table and perform the adaptive codiming modulation more flexibly.

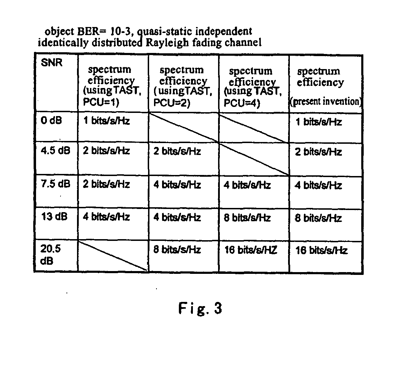

Fig. 3 is a schematic diagram showing a comparison of performance between the adaptive modulation method of the present invention and a traditional method. In Fig. 3, it is assumed that the traditional adaptive modulation method adopts the TAST space-time code with a fixed architecture (PCU =1, PCU = 2, PCU = 4 respectively), the object BER is $10^{-3}$ and the channel is a quasi-static independent identically distributed Rayleigh fading channel. Accordingly, the performance comparison between the adaptive modulation method used by the transmitter in embodiment 1 and the traditional method shows when the SNRs are the same respectively, the present invention gets a higher frequency spectrum efficiency (the slash line means the traditional method cannot work).

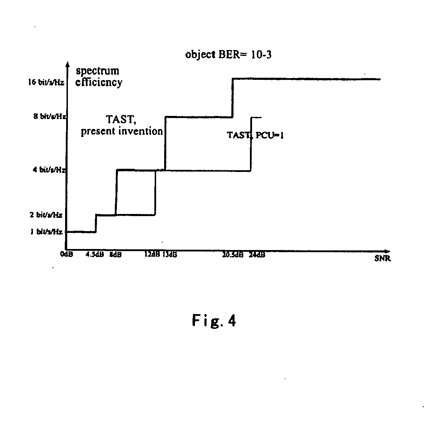

Fig. 4 is a schematic diagram showing a comparison between the adaptive modulation method of the present invention and a traditional method. In Fig. 4, it is assumed that the traditional adaptive modulation method adopts the TAST space-time code with a fixed architecture (PCU = 1). Accordingly, the performance comparison between the adaptive modulation method used by the transmitter in embodiment 1 and the traditional method shows when the SNRs are the same respectively, the present invention gets a higher frequency spectrum efficiency; or when the frequency spectrum efficiencies are the same respectively, the present invention gets a lower SNR.

According to the adaptive coding and modulation method of the present invention and the transmitter using thereof, the spectrum efficiency of the system can be improved while a certain signal transmission quality is guranteed by optimizing the architecture of the space-time code and thus a higher frequency efficiency and a better system robustness can be obtained. In addition, the table may be dynamically adjusted according to the feedback from the receiver and the adaptive coding and modulation may be performed more flexibly.

Although illustrative embodiments have been described herein with reference to the accompanying drawings, it is to be understood by those skilled in the art that the present invention is not limited to those preferred embodiments, and that various changes and modifications can be made therein without departing from the spirit and the scope of the invention. Thus, it is intended that the present invention covers the modifications and variations of this invention provided they come within the scope of the appended claims and their equivalents.

**Claims**

**1.** An adaptive space-time coding and modulation method, comprising steps of:

obtaining a curve corresponding to a modulation mode, a coding mode of a space-time code, a parameter indicating signal transmission quality and a SNR by simulating or measuring at transmit-side and making a table with correspondences between the SNR, the modulation mode and the coding mode of the space-time code according to a SNR range corresponding to a predefined signal transmission quality, or

obtaining a curve corresponding to a modulation mode, a channel coding rate, a coding mode of a space-time code, a parameter indicating signal transmission quality and a SNR by simulating or measuring at transmit-side and making a table with correspondences between the SNR, the modulation mode, the channel coding rate and the coding mode of the space-time code according to a SNR range corresponding to a predefined signal transmission quality;

obtaining the SNR at receive-side by measurement or feedback channel, comparing the obtained SNR with the SNR range according to the table and slecting corresponding modulation mode and coding mode of the space-time code or selecting corresponding modulation mode, channel coding rate and coding mode of the space-time code; and

performing signal modulation and space-time coding or performing signal modulation, channel coding and space-time coding according to the selected results.

2. The adaptive space-time coding and modulation method according to claim 1, wherein
the parameter indicating the signal transmission quality comprises bit error rate, frame error rate, block error rate or other parameters which can reflect the quality of the transmit signal;
per channel use (PCU) of the space-time code is adjustable and the space-time code comprises a linear dispersion space-time code (LD code), a threaded algebra space-time code (TAST) or orthers space-time code whose PCU is adjustable.

3. The adaptive space-time coding and modulation method according to claim 2, wherein
the coding mode of the space-time code is not fixed and the per channel use changes with the variant of the channel so as to achieve high spectrum efficiency with quality of service guaranteed.

4. The adaptive space-time coding and modulation method according to claim 3, wherein
in the table, if second SNR value is larger than first SNR value, per channel use and/or modulation mode order and/or'channel coding rate correspongding to the second SNR is higher than per channel use and/or modulation mode order and/or channel coding rate correspongding to the first SNR.

5. The adaptive space-time coding and modulation method according to any of claims 1-4, further comprising,
transfering the table and the selecting results from the transmit-side to the receive-side for demodulating and decoding received signals,
and when detecting that the predefined signal transmission quality cannot be satisfied at the receive-side, feeding detection result back to the transmit-side and re-obtaining the SNR at receive-side, comparing the obtained SNR with the SNR range and performing the selection, or adjusting the table by using lower modulation mode and/or reducing the per channel use of the space-time code.

6. A transmitter, comprising:

a table-making module for obtaining a curve corresponding to a modulation mode, a coding mode of a space-time code, a parameter indicating signal transmission quality and a SNR by simulating or measuring at the transmitter and making a corresponding table taking into account the SNR, the modulation mode and the coding mode of the space-time code according to a SNR range and the predefined signal transmission quality, or
obtaining a corresponding curve with taking into account modulation mode, channel coding rate, coding mode of a space-time code, parameter indicating signal transmission quality and SNR by simulating or measuring at the transmitter and making a corresponding table;
an obtaining and selecting module, for obtaining the SNR at receiver by measurement or feedback channel, comparing the obtained SNR with the SNR range according to the table and slecting corresponding modulation mode and coding mode of the space-time code or selecting corresponding modulation mode, channel coding rate and coding mode of the space-time code; and
a coding and modulation module, for performing signal modulation and space-time coding or performing signal modulation, channel coding and space-time coding according to the selected results.

7. The transmitter according to claim 6, wherein
the parameter indicating the signal transmission quality comprises bit error rate, frame error rate, block error rate or or other parameters which can reflect the quality of the transmit signal;
per channel use of the space-time code is adjustable and the space-time code comprises a linear dispersion space-time code (LD code), a threaded algebra space-time code (TAST) or orther space-time code whose per channel use is adjustable.

8.  The transmitter according to claim 7, wherein
    the coding mode of the space-time code is not fixed and the per channel use of the space-time code changes with the channel condition, and the channel condition comprises SNR value, channel condition number of the channel

9.  The transmitter according to claim 8, wherein
    in the table, if second SNR value is larger than first SNR value, per channel use and/or modulation mode order correspongding to the second SNR is higher than per channel use and/or modulation mode order correspongding to the first SNR.

10. The transmitter according to any one of claims 6-9, wherein
    the transmitter transmits the table and the selecting results to the receiver for demodulating and decoding received signals,
    and when detecting that the predefined signal transmission quality cannot be achieved at the receive-side, the receiver feeds detection result back to the transmiter and the transmitter re-obtains the SNR at receive-side, compares the obtained SNR with the SNR range and performs the selection, or adjusts the table by using lower modulation mode and/or low rate of channel code and/or reducing the per channel use of the space-time code.

Fig. 1

Fig. 2

object BER= 10-3, quasi-static independent
identically distributed Rayleigh fading channel

| SNR | spectrum efficiency (using TAST, PCU=1) | spectrum efficiency (usingTAST, PCU=2) | spectrum efficiency (using TAST, PCU=4) | spectrum efficiency (present invention) |
|---|---|---|---|---|
| 0 dB | 1 bits/s/Hz | | | 1 bits/s/Hz |
| 4.5 dB | 2 bits/s/Hz | 2 bits/s/Hz | | 2 bits/s/Hz |
| 7.5 dB | 2 bits/s/Hz | 4 bits/s/Hz | 4 bits/s/Hz | 4 bits/s/Hz |
| 13 dB | 4 bits/s/Hz | 4 bits/s/Hz | 8 bits/s/Hz | 8 bits/s/Hz |
| 20.5 dB | | 8 bits/s/Hz | 16 bits/s/HZ | 16 bits/s/Hz |

Fig. 3

Fig. 4

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TIRKKONEN O; KOKKONEN M; KALLIOJARVI K: "Packet throughput of adaptive space-time modulation" FIFTH IEE INTERNATIONAL CONFERENCE ON 3G MOBILE COMMUNICATION TECHNOLOGIES (3G 2004), 20 October 2004 (2004-10-20), - 20 October 2004 (2004-10-20) pages 11-15, XP002438681 * abstract * * page 13 - page 15 * | 1-10 | INV. H04L1/00 |
| X | KYU JONG HWANG ET AL: "Adaptive rate MIMO system using space-time block mapping" VTC 2003-SPRING. THE 57TH. IEEE SEMIANNUAL VEHICULAR TECHNOLOGY CONFERENCE. PROCEEDINGS. JEJU, KOREA, APRIL 22 - 25, 2003, IEEE VEHICULAR TECHNOLGY CONFERENCE, NEW YORK, NY : IEEE, US, vol. VOL. 4 OF 4. CONF. 57, 22 April 2003 (2003-04-22), pages 774-778, XP010862213 ISBN: 0-7803-7757-5 * the whole document * | 1-10 | |
| X | REZKI Z ET AL: "A Threshold-Based Adaptive Encoding for Achieving the Diversity-Multiplexing Tradeoff" WIRELESS COMMUNICATION SYSTEMS, 2005. 2ND INTERNATIONAL SYMPOSIUM ON SIENA, ITALY 05-09 SEPT. 2005, PISCATAWAY, NJ, USA,IEEE, 5 September 2005 (2005-09-05), pages 8-12, XP010886195 ISBN: 0-7803-9206-X * the whole document * -/-- | 1-10 | TECHNICAL FIELDS SEARCHED (IPC) H04L |

The present search report has been drawn up for all claims

| Place of search | Date of completion of the search | Examiner |
|---|---|---|
| Munich | 21 June 2007 | MARTINEZ MARTINEZ, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 07 00 4285

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NORTEL: "R1-051427, DL MIMO Modes for 4-Transmit Antenna" 3GPP TSG-RAN1 MEETING 43, - 11 November 2005 (2005-11-11) XP002438682 Retrieved from the Internet: URL:http://www.3gpp.org/ftp/tsg_ran/WG1_RL 1/TSGR1_43/Docs/> * the whole document * ----- | 1,6 | |
| P,X | CHUNLIN YAN; ZHAN ZHANG; KAYAMA H: "An AM-STC (adaptive modulation & space-time coding) scheme for future MIMO systems" 2006 IEEE 17TH INTERNATIONAL SYMPOSIUM ON PERSONAL, INDOOR AND MOBILE RADIO COMMUNICATIONS, 14 September 2006 (2006-09-14), - 14 September 2006 (2006-09-14) XP002438683 * the whole document * ----- | 1-10 | |

TECHNICAL FIELDS
SEARCHED     (IPC)

The present search report has been drawn up for all claims

| Place of search | Date of completion of the search | Examiner |
|---|---|---|
| Munich | 21 June 2007 | MARTINEZ MARTINEZ, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)